# EUROPEAN PATENT SPECIFICATION

(11) **EP 2 850 683 B1**
(45) Date of publication and mention of the grant of the patent: **14.09.2016**
(21) Application number: 13723152.8
(22) Date of filing: 16.05.2013
(51) Int. Cl.: H01M 8/24, H01M 8/02, H01M 8/10

(54) **ARRANGEMENT FOR THE ALIGNMENT OF A MEMBRANE-ELECTRODE-ASSEMBLIES WITHIN A STACK DURING ASSEMBLY**
ANORDNUNG ZUR AUSRICHTUNG VON MEMBRAN-ELEKTRODEN-EINHEITEN INNERHALB EINES STAPELS WÄHREND DES ZUSAMMENBAUS
ARRANGEMENT POUR L'ALIGNEMENT D'UNITÉS MEMBRANE-ÉLECTRODE PENDANT L'ASSEMBLAGE D'UN EMPILEMENT

(30) Priority: 16.05.2012 DE 202012004926 U
(43) Date of publication of application: 25.03.2015
(73) Proprietor: REINZ-Dichtungs-GmbH, 89233 Neu-Ulm (DE)
(72) Inventor: GEHRING, Horst, 88477 Orsenhausen (DE); KUNZ, Claudia, 89073 Ulm (DE); GRÜNWALD, Bernadette, 89075 Ulm (DE); GLÜCK, Rainer, 89160 Dornstadt (DE); SCHERER, Joachim, 89075 Ulm (DE)
(74) Representative: Pfenning, Meinig & Partner mbB
(86) International application number: PCT/EP2013/060191
(87) International publication number: WO 2013/171323

(56) References cited:
- JP-A- 2000 048 849
- JP-A- 2007 128 857
- JP-A- 2008 293 896
- US-A1- 2008 268 316
- US-A1- 2009 068 540
- US-A1- 2010 297 525

## Description

The present invention relates to an electrochemical system.

The electrochemical system can for instance be a fuel cell system or an electrochemical compressor system, especially an electrolyzer. Application of an electrical potential to such electrolyzer apart from the actual production of hydrogen and oxygen from water, causes that these gases are simultaneously compressed under pressure. In addition, electrochemical compressor systems are known which are supplied with with gaseous molecular hydrogen and in which this gaseous molecular hydrogen is electrochemically compressed when an electrical potential is applied. This kind of electrochemical compression is especially suited for small amounts of hydrogen to be compressed, as a mechanical compression of the hydrogen in this case would be much more complex.

A well-known kind of electrochemical systems comprises a stack of electrochemical cells with a layering of a plurality of electrochemical cells, which are separated by separator plates, respectively. The separator plates have several tasks:
- Electrical contacting of the electrodes of the individual electrochemical cells, e.g. the fuel cells, and continuous conduction of electrical current to the neighboring cell which allows for a serious circuit of the cells,
- Supply of the cells with media, e.g. with reaction gases and removal of the reaction products through a channel structure which is arranged in an electrochemically active area, the so-called flowfield,
- Transfer of the heat produced by the reaction in the electrochemical cell, as well as
- Sealing of the different media and cooling channels against one another and to the outside.

The separator plates may comprise passages for the cooling and/or the supply and removal of media which serve for the supply and removal of media to the actual electrochemical cells. These electrochemical cells are for instance membrane electrode assemblies, also referred to as MEA, which MEA each comprise a polymer electrolyte membrane, at least one electrochemically active electrode and/or catalyst layer, as well as at least one gas diffusion layer (GDL), e.g. from metallic or carbon fleece. The GDL points towards the separator plate.

The distribution of gas in these known separator plates is effected along the MEA or its GDL using the channel and meander structures on at least one of the surfaces of the separator plate, for instance on both sides of the separator plate.

During the production of the electrochemical system, the individual layers are stacked one on the other. In order to prevent leakages and thus a malfunction of the complete system, it is important that e.g. passage openings are arranged in a flush manner relative to each other and that no squeezing of individual layers occurs when the individual layers are compressed tightly. Such squeezing might occur with displaced or wrongly dimensioned layers.

Given the considerable production tolerances of separator plates and MEAs (particularly the outer contour of the MEA), it is necessary in the state of the art to keep the clearance of these parts large in order to prevent from an undesired overlap of layers, such as an overlap of a GDL on the surface of a MEA with a flank of a sealing structure, e.g. a sealing bead in a separator plate. This causes that the geometry of the parts cannot be defined to the degree desired. To reduce the production tolerances might be an alternative, but it is costly.

JP 2007 128857 A relates to a fuel cell system comprising separators and MEAs, each comprising at least two positioning openings through which a positioning pin protrudes during assembly, thereby aligning the components perpendicularly to the stacking axis. Openings are partly surrounded by gaps inherently providing a certain resiliency to the positioning structure. The MEA comprises gas diffusion layers and is sealed by means of beadlike seals.

In view of this, it is the object of the current invention to provide for an electrochemical system which ascertains a reliable positioning of the individual layers with respect to each other, especially a reliable positioning of the MEAs relative to the separator plates, at low cost.

This object is achieved by an electrochemical system according to claim 1 and a configuration according to claim 12, respectively.

The electrochemical system according to the invention, e.g. a fuel cell system, comprises at least the following characteristics:
- Two separator plates as well as
- A membrane-electrode assembly (MEA) arranged between these separator plates with
- The MEA being arranged at least in regions between the separator plates, with
- The separator plates and the MEA each comprising at least two passage openings for a flush arrangement of the separator plates and the MEAs at positioning devices during the assembly of the electrochemical system and
- A resilient bridge arranged at the periphery of at least one passage opening for a mechanical rest on the at least one positioning device in such a manner that
- During the stacking of the separator plates and the MEAs, the MEAs centers themselves in a direction orthogonal to the stack direction between the separator plates,
wherein the resilient bridge adjoins to a passage hole in the membrane-electrode assembly, where this hole does not serve for the passage of media.

The configuration for the production of such an electrochemical system according to the invention comprises at least the following characteristics:
- A positioning apparatus with at least two positioning devices as well as
- At least two separator plates and a MEA, with
- The separator plates and the MEA each comprising at least two passage openings for a flush arrangement of the separator plates and the MEAs at positioning devices during the assembly of the electrochemical system and
- A resilient bridge arranged at the periphery of at least one passage opening for a mechanical rest on the at least one positioning device in such a manner that
- During the stacking of the separator plates and the MEAs, the MEAs center themselves in a direction orthogonal to the stack direction between the separator plates, and
- The resilient bridge adjoins to a passage hole in the membrane-electrode assembly, where this hole does not serve for the passage of media.

With the resilient abutting areas, the MEAs and their adjacent parts can be designed in such a way that no clearance has to be provided for. The resilient leaning area or several resilient leaning areas shift the MEA, which is actually a foil-like part, to the centre of tolerance without any bending or buckling of the MEA. This way, the MEA remains free of both wrinkles and undefined interspaces. If several resilient leaning areas are present, it is preferred that they show identical spring rates.

Within a limited range, the MEA also may shift to the correct position with respect to the adjacent sealing beads, which causes that the GDL fixed to membrane in a secure way comes to rest in the "bead pocket". As a consequence, the size of the GDL can be exactly adapted to the size of the "bead pocket", so that the critical edge areas of the MEAs have a better support and an increased bypass in the gap between the bead and the GDL is prevented from.

It is one of the principles of the instant invention that resilient bridges are arranged in a manner that forces between pins and resilient bridges which are directed in the separator plates / the MEAs lead to an alignment of a durality of stated separator plates /MEAs.

An embodiment provides that the resilient bridge is formed at the outer edge of the MEA or that the resilient bridge adjoins to a hole in the MEA, with this hole not being designed as a passage hole for passing media in the stack direction. It is thus in principle possible to arrange the resilient bridge(s) on every position of the MEA, both at the periphery of the MEA or in its central areas.

Advantageous embodiments are described in the dependent claims.

In one embodiment, the polymer electrolyte membrane at least in sections at least on one of its surfaces pointing towards a bipolar plate is permanently connected with a GDL. In this respect, several arrangements are possible, which are usually symmetric relative to the polymer electrolyte membrane arranged in the centre. In the state of the art, MEAs with a 5-layer and with a 7-layer design are known. The individual layers comprise one electrolyte membrane, two electrode layers, two GDLs and - in case of a 7-layer design - two edge-reinforcing foils in the non-active area of the MEA. In all embodiments, it is characteristic that the GDL which is laminated on the surface of the MEA does not extend over the complete area of the central layer, thus of the membrane and/or the reinforcing film. Usually, the edge area of the MEA is not covered with a relatively thick GDL. As a consequence, it is possible to clamp the membrane between the seals of the adjacent separator plates without the GDL being compressed by the seals. Usually, the GDL is then laterally delimited by the seals, e.g. by sealing beads. In order to achieve a good efficiency of the electrochemical system, it is advantageous that the distance between the outer edge of the GDL and the seal is small.

The sealing devices already mentioned above are preferably designed in such a way that they circumferentially delimit an electrochemically active area of the MEA and at the same time encircle the area covered by the GDL. This way, they delimit the bead pocket already mentioned above. The seal, which is usually circumferential, may be designed in different manners. It can for instance be provided as a sealing bead, thus as an integral structure in the separator plate itself. With a metallic separator plate, such sealing bead is generally embossed. As an alternative, it is also possible to provide the seal as an elastomeric bead or rib or as a sealing frame which is inserted into or arranged on the separator plate.

The separator plate may for instance be realized as a monopolar plate or a bipolar plate. In case of a bipolar plate, the separator plate comprises in fact a pair of joined plates. The separator plate may consist in a variety of materials. It can for instance be produced completely or in part from metal or plastics. It is also possible that the one-layered separator plate or each of the two plates of the bipolar plate is designed as an embossed, one-piece metallic part. For this embodiment, it is preferred that the channels for the guidance of the fluids of the electrochemical system as well as the seals are embossed, too. It is even possible that all these structures in an individual plate are embossed with a single tool in a single working step. In addition, it is possible to provide for a hollow space between the two plates forming the bipolar plate. This hollow space can for instance be used for the guidance of coolant. The separator plates, dependent on their material and the conditions to be met, may have a thickness of 0.05 to 0.12 mm, preferably of 0.075 and 0.1 mm, in both cases including the limits mentioned. The thickness relates to the material thickness of the unformed flat material, preferably of a metal sheet.

The membrane electrode assembly with its 5-layer or 7-layer design may have a thickness of 0.1 to 0.7 mm, preferably of 0.15 to 0.4 mm with the limits being either included or excluded from the ranges mentioned.

A further embodiment provides that the resilient bridge is formed from the membrane and/or the reinforcing film and in the stack direction exhibits a thickness of 100 to 500 µm, preferably of 150 to 300 µm with the limits being either included or excluded from the ranges mentioned. The resilient bridge in its plane orthogonal to the stack direction shows a suiting spring resiliency with a typical width of the bridge of 0.5 to 3 mm, preferably of 1.0 to 1.5 mm. The spring resiliency in this area is at least as large as to overcome the frictional force of the MEA when the MEA lies uncompressed on the active area of the separator plate and to enable a self-centering of the MEA. At the same time the spring resiliency is as small as to avoid a deformation of the edge area of the MEA adjacent to the resilient bridge. This way, a warping of the complete MEA is avoided.

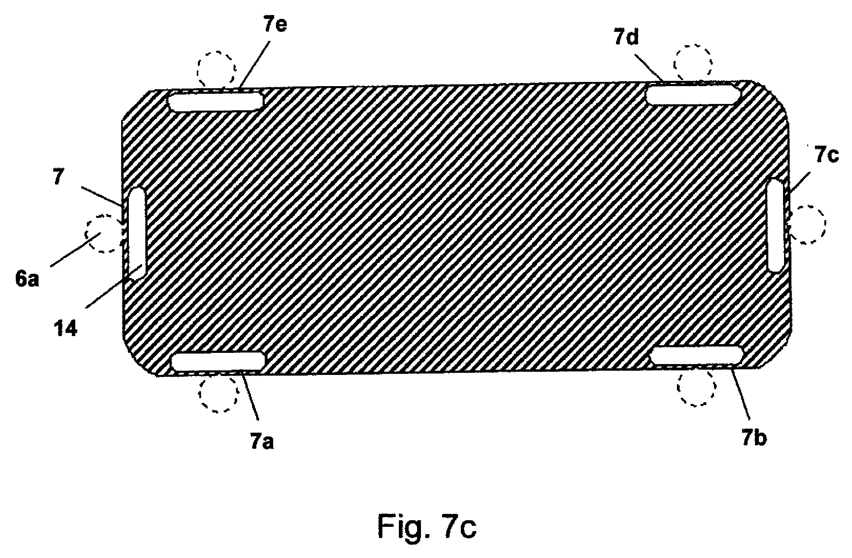

The number of resilient bridges may vary according to the size of the MEA, its stiffness and the required degree of self-centering. It is possible to design the MEA with a single resilient bridge. Another embodiment provides two resilient bridges arranged on opposite sides and at the periphery of the MEA. It is however also possible to design the MEA with a larger number of resilient bridges, e.g. with six resilient bridges, see figure 7c. These resilient bridges are each positioned in such a way that they abut to a positioning device, e.g. to a positioning pin. The positioning device itself is part of an apparatus for stacking the layers.

In the above mentioned configuration for a simple production of an electrochemical stack according to the invention, the at least one resilient bridge at the outer edge of the MEA can be provided with such an oversize, that a permanent pressure butts against a positioning device, such as a positioning pin. In this context, the positioning device leans to the periphery of the MEA from the outside. Thus, the MEA as such rather shows an oversize which is compensated for by the displacement of the resilient bridge. This assures a self-centering of the MEA between the at last two positioning devices. An alternative embodiment provides that at least one resilient bridge is designed in such a way and can lean to a positioning device arranged in the inner area of the MEA that the MEA strains itself between two positioning devices. In this variant, tension causes a self-centering. This is in contrast to the aforementioned example, where the self-centering of the MEA between the positioning devices is achieved by pressure.

In principle, it is possible that not only the MEAs, but the separator plates are provided with resilient bridges. Given the smaller inherent resiliency of the typical materials of separator plates compared to the membrane materials at the edge of a MEA, the centering effect is much larger for a MEA than for a separator plate.

The invention shall now be explained on the example of several figures. It is shown in

| | |
|---|---|
| Figures 1 and 2: | The general construction of an electrochemical system according to the invention; |
| Figures 3a and 3b: | Partial sectional views of electrochemical systems according to the invention, which partial sectional views show the multi-layer MEA relative to the course of the lateral beads; |
| Figures 4a to 4c: | An illustration of the deficiencies in electrochemical systems according to the state of the art; |
| Figure 5: | A top-view to a MEA according to the invention; |
| Figures 6a and 6b: | An illustration of advantageous geometries in an electrochemical system according to the invention; |
| Figures 7a to 7d | Alternative positions of resilient bridges in MEAs according to the invention. |

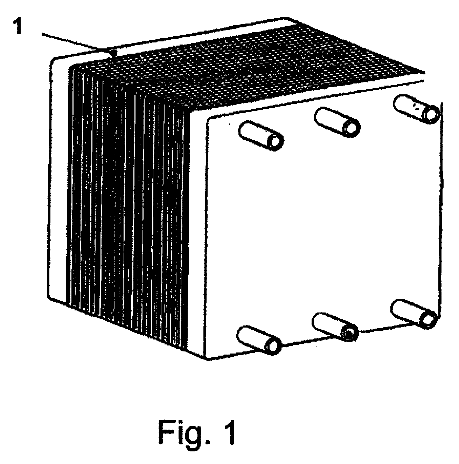

Figure 1 shows an electrochemical system 1. It is designed as a layering of a plurality of separator plates with a MEA arranged in each of their interspaces. This layering is compressed between two endplates, which can be identified at the outer edges in figure 1, both on the left-hand and on the right-hand side. In addition, six fluid conducts are shown. Four of them provide for the supply and efflux of reaction media, the other two realize the supply and release of coolant.

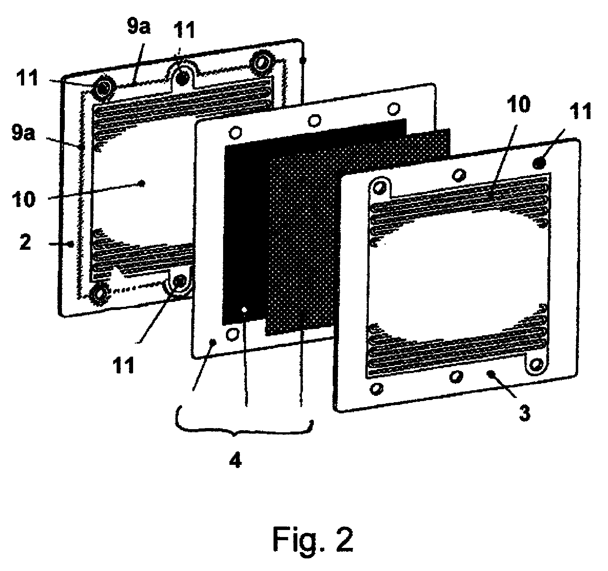

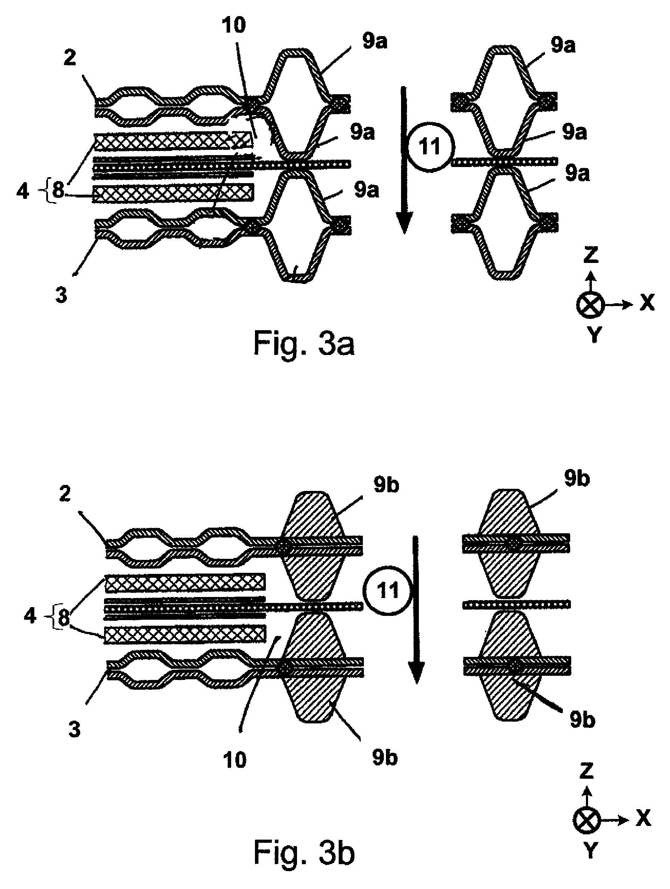

Figure 2 shows an exploded view of two separator plates, in the example shown two bipolar plates 2 and 3 with a MEA 4 arranged between the bipolar plates. The layered construction of the MEA will be further considered in the context of figures 3a and 3b.

Right here in figure 2, one can already realize that the electrochemically active area 10 of the electrochemical system which is essentially congruent with the area in which the channels of the bipolar plate extend is encircled by a sealing arrangement, e.g. by a bead arrangement 9a. The area in the centre of the bipolar plate which is encircled by the sealing beads is also referred to as bead pocket.

Details for this are explained in the context of figures 3a and 3b.

A section of the bipolar plates 2 and 3 shown in figure 2, namely the area of a port opening 11 is shown in figure 3a. The port opening 11 enables the flow of a medium through an electrochemical system. In figure 3a, this flow is indicated with an arrow pointing downwards. Between the bipolar plates 2 and 3, a MEA 4 is arranged. For illustrative purposes, the MEA 4 is depicted as a layering of five layers with a distance between the layers. It shall however be mentioned that in the installed state, these five layers are permanently laminated to each other so that they cannot be shifted relative to each other in a horizontal direction, thus in the X-Y plane.

The port opening 11 is sealed towards other areas of the bipolar plate by bead arrangements 9a. The MEA in its electrochemically active area 10 on both surfaces shows GDLs 8. The electrochemically active area 10 is thus dimensioned in such a way that the GDLs 8 in the X-Y plane do not touch the bead arrangement 9a on the right hand side. At the same time, it has to be ascertained that the GDL 8 approximates the bead arrangement 9a as closely as possible but does not touch or overlap it. If the GDL 8 protruded too far to the right-hand side, it would be squeezed or bent by the bead arrangement, which has to be prevented. In order to achieve a secure positioning of the MEA, the central layer of the MEA, the actual membrane, thus a foil, protrudes on the right-hand side and shows a passage opening in the area of the port opening 11. This area of the MEA, which means either only the membrane itself of a lamination of the reinforcing foils or a lamination of reinforcing foils and the membrane, is fixed between the bead arrangements 9a with the pressure resulting from the stacking of the bipolar plates.

Figure 3b shows an alternative embodiment. Here, elastomeric seals 9b, namely elastomeric ribs, are provided instead of the integral bead arrangements 9a. Apart from this, the arrangement is the same as in Figure 3a. The bipolar plates shown in figures 3a and 3b are realized as pairs of embossed metallic parts. Other than in figure 3b, the bead arrangements 9a in figure 3a are integrally embossed, too.

Figures 4a to 4c are intended for an illustration of the deficiencies of the state of the art. These illustrations are more schematic than the ones in figures 3a and 3b for clarity reasons.

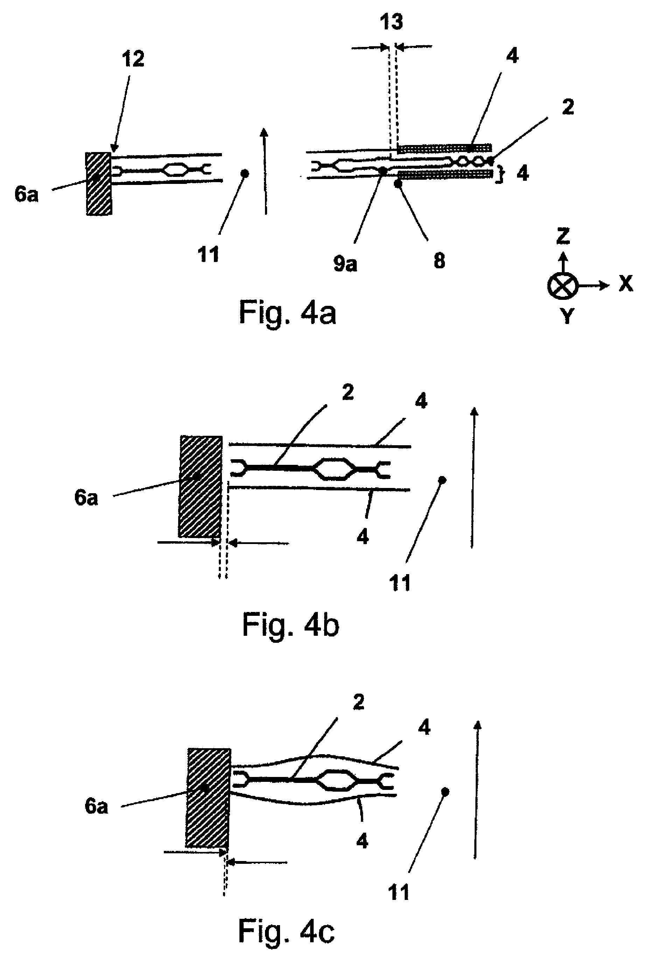

Figure 4a shows the situation when producing an electrochemical system according to the state of the art. Here, a layering with a lower MEA 4, a bipolar plate 2 arranged on top of it and an upper MEA 4 is shown. Again, an area with a port opening 11 is shown, which essentially corresponds to an edge area of the bipolar plate. The layering is realized in such a way that one or several positioning devices such as the positioning pin 6a shown, are arranged laterally. The actual layering of the MEAs and the bipolar plates is then performed alternatingly between these positioning devices. These positioning devices aim on a flush arrangement of all layers of the stack. As is indicated with the dimension arrow heads 13 in figure 4a, it is intended to keep the clearance between the bead arrangement 9a and the area of the MEA covered with a GDL as small as possible. The dimension arrow heads 13 depict the positional tolerance between MEA and bead. The example shown in figure 4a represents a continuous edge of the membrane 12 without any weaknesses or bridges.

The problems related to this configuration are illustrated in figures 4b and 4c.

Figure 4b shows a large clearance between the positioning device and the MEA; only the protruding edge of the MEA membrane is shown. This causes that the bipolar plate and the MEA can shift relative to each other and that the positional tolerance 13 - see figure 4a - is insufficiently maintained.

A different case is shown in figure 4c. Here a negative clearance is shown, which is indicated with the dimension arrow heads 13. Here, the MEA is too large for the area encircled by the positioning devices 6a etc., as a consequence, the MEA is forced sideways, so that it gets undulated and therefore, the positional tolerance 13 as desired - see figure 4a - cannot be achieved, neither.

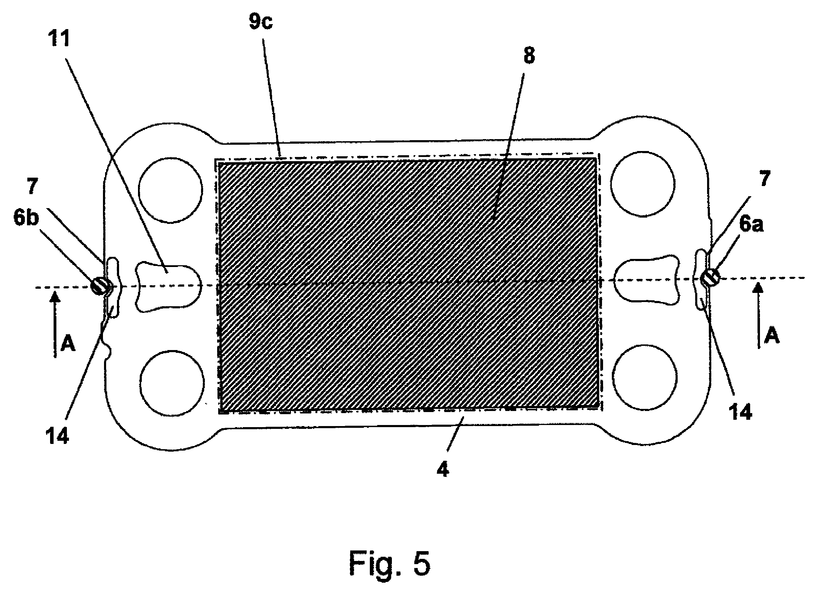

Figure 5 shows a MEA according to the invention, with which the above mentioned disadvantages can be overcome. The MEA 4, which in the area of the bead pocket 9c of the adjacent separator plate is permanently laminated to a GDL 8, on its left and its right edge comprises resilient bridges 7, which are arranged at the outer periphery of the MEA. Openings 14 area provided which are arranged adjacent to the resilient bridges 7 on the side pointing towards the centre of the MEA. These openings 14 enable the resiliency of the bridges. The bridge at its smallest position has a width of 0.5 to 3.0 mm, preferably 1.0 to 1.5 mm in its plane, thus in the plane of the drawing sheet.

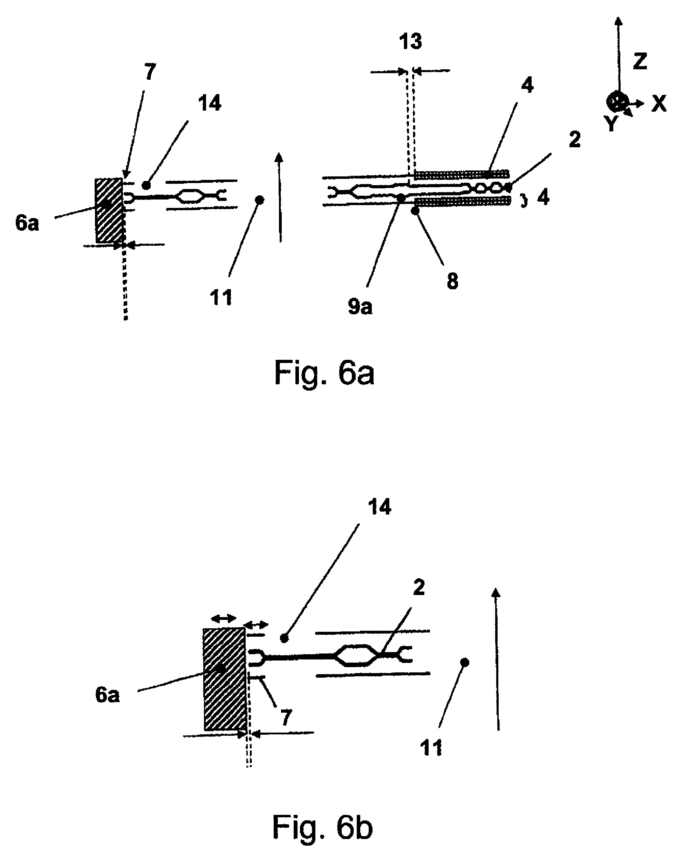

Thus, a resilient bridge is provided at the periphery of at least one passage hole in the MEA. This resilient bridge allows for a close mechanical contact of the MEA and at least one positioning device, here with two pins (6a, 6b), one on the left-hand side and one on the right hand side. Each pin engages into the notch of a resilient bridge. As a consequence, during the stacking of the separator plates and the MEAs, the MEA centers itself between the separator plates in a direction perpendicular to the stacking direction. This way, an optimal positioning of the GDL 8 in the bead pocket 9c is achieved. This means that the edge area of the GDL 8 adjoins to the flanks of the bead arrangements 9a with a clearance as small as possible, see also figure 6a.

Figure 6a shows a sectional view according to A-A in figure 5. Here, it is obvious that the positional tolerance between the MEA and the bead, reference number 13, is kept minimal. This is mainly caused by the movement of the resilient bridge 7 and its opposite counterpart 7, thus the bridge 7 on the right-hand side in figure 5.

Figure 6b represents an enlarged detail, which shows the deflection of the bridge, the relative position of the positioning pin 6a as well as the tolerance between the MEA, or to be more precise, its outmost membrane and/or foil section, and the positioning pin 6a.

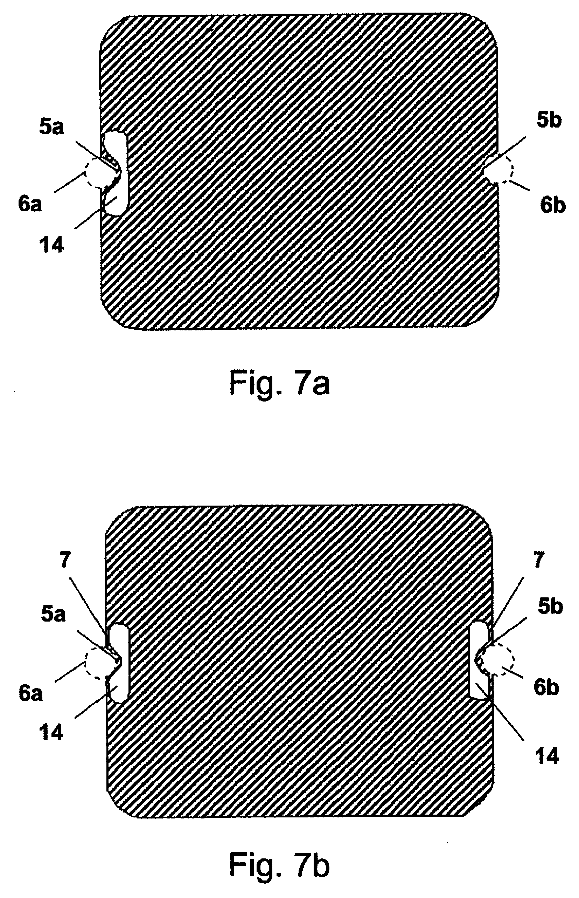

Figures 7a to 7c show variants of the MEA shown in figure 5. Here the surface of the MEA is indicated in a schematic manner only. In these figures, only the resilient bridges 7 and their adjacent openings 14 are explicitly depicted.

Figure 7a shows an embodiment with only one resilient bridge per MEA, while the embodiment in figure 5 shows two such resilient bridges. The resilient bridge 7 here interacts with the opposite positioning pin 6b.

Figure 7b represents an embodiment with two resilient bridges as in figure 5.

For extensive MEAs, an embodiment is preferred which comprises resilient bridges on all its outer edges, as is shown in figure 7c. In the example shown here, a total of six resilient bridges are given. The corresponding configuration of the production of the electrochemical system may accordingly provide six positioning devices, e.g. six pins, which are positioned accordingly.

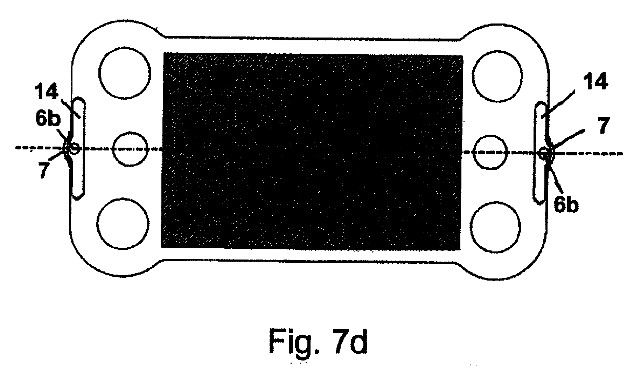

Fig. 7d represents an alternative embodiment with two openings 14 and respective resilient bridges 7. Unlike, for example, fig. 7b, the bridges are configured in a manner that allows positioning pins 6b to be arranged inside the openings 14.

## Claims

1. Electrochemical system (1), especially fuel cell system, comprising:
- two separator plates (2, 3) as well as
- a membrane-electrode assembly (4) arranged between these separator plates with
- the membrane-electrode assembly (4) being arranged at least in regions between the separator plates (2, 3), with
- the separator plates (2, 3) and the membrane-electrode assembly (4) each comprising at least two passage openings (5a, 5b) for a flush arrangement of the separator plates (2, 3) and the membrane-electrode assembly (4) at positioning devices (6a, 6b) during the assembly of the electrochemical system (1) and
- a resilient bridge (7) arranged at the periphery of at least one passage opening (5a, 5b) for a mechanical butting to the at least one positioning device (6a, 6b) in such a manner that
- during the stacking of the separator plates (2, 3) and the membrane-electrode assemblies (4), the membrane-electrode assemblies (4) center themselves in a direction orthogonal to the stack direction between the separator plates (2, 3),
wherein the resilient bridge (7) adjoins to a passage hole in the membrane-electrode assembly (4), where this hole does not serve for the passage of media.

2. Electrochemical system according to claim 1, **characterized in that** the membrane-electrode assembly (4) at least in sections on its at least one surface pointing towards a separator plate (2, 3) comprises a gas diffusion layer (8).

3. Electrochemical system according to one of the preceding claims, **characterized in that** at least one separator plate (2, 3) comprises a seal (9a, 9b), especially a seal for circumferentially delimiting an electrochemically active region (10) of the membrane-electrode assembly (4).

4. Electrochemical system according to one of the preceding claims, **characterized in that** the seal (9a, 9b) encircles a region of the membrane-electrode assembly (4) which is covered by the gas diffusion layer (8).

5. Electrochemical system according to one of claims 3 or 4, **characterized in that** the seal is formed as a sealing bead (9a).

6. Electrochemical system according to claim 5, **characterized in that** the sealing bead (9a) is formed as an integral structure of the separator plate (2, 3), especially embossed in the separator plate (2, 3).

7. Electrochemical system according to one of claims 3 or 4, **characterized in that** the seal is realized as an elastomeric rib (9b) and/or as an insertion frame.

8. Electrochemical system according to one of the preceding claims, **characterized in that** the membrane-electrode assembly (4) in the area of the gas diffusion layer has a thickness of 0.1 to 0.7 mm, preferably of 0.15 to 0.4 mm.

9. Electrochemical system according to one of the preceding claims, **characterized in that** the resilient bridge (7) in a direction orthogonal to the stack direction shows a minimum width of 0.5 to 3, preferably 1 to 1.5 mm.

10. Electrochemical system according to one of the preceding claims, **characterized in that** the resilient bridge (7) is formed at the outer periphery of the membrane-electrode assembly (4).

11. Electrochemical system according to one of the preceding claims, **characterized in that** the membrane-electrode assembly comprises one, two, three or more resilient bridges (7a, 7b, 7c, 7d, 7e) for butting to the respective positioning device (6a, 6b).

12. Configuration for the production an electrochemical system comprising:
- A positioning apparatus with at least two positioning devices (6a, 6b) as well as
- At least two separator plates (2, 3) and a membrane-electrode assembly (4), with
- The separator plates (2, 3) and the membrane-electrode assembly (4) each comprising at least two passage openings (5a, 5b) for a flush arrangement of the separator plates (2, 3) and the membrane-electrode assembly (4) at positioning devices (6a, 6b) during the assembly of the electrochemical system (1) and
- A resilient bridge (7) arranged at the periphery of at least one passage opening (5a, 5b) for a mechanical butting to the at least one positioning device (6a, 6b) in such a manner that
- During the stacking of the separator plates (2, 3) and the membrane-electrode assemblies (4), the membrane-electrode assemblies (4) center themselves in a direction orthogonal to the stack direction between the separator plates (2, 3), and
- The resilient bridge (7) adjoins to a passage hole in the membrane-electrode assembly (4), where this hole does not serve for the passage of media.

13. Configuration according to claim 12, **characterized in that** the outer edge of the membrane-electrode assembly (4) is provided with such an oversize in the region of the at least one resilient bridge (7) that a permanent pressure is exerted to a positioning device which from the outside of the membrane-electrode assembly (4) butts to the periphery of the membrane-electrode assembly (4).

14. Configuration according to claim 12, **characterized in that** at least one resilient bridge (7) is designed in such a way that it is able to butt to a positioning device (6) in an inner area of the membrane-electrode assembly (4) that the membrane-electrode assembly (4) strains itself between two positioning devices (6).

## Patentansprüche

1. Elektrochemisches System (1), insbesondere Brennstoffzellensystem, umfassend:
- zwei Separatorplatten (2, 3) sowie
- eine Membran-Elektroden-Einheit (4), welche zwischen den Separatorplatten angeordnet ist, wobei
- die Membran-Elektroden-Einheit (4) zumindest in Bereichen zwischen den Separatorplatten (2, 3) angeordnet ist, wobei
- die Separatorplatten (2, 3) und die Membran-Elektroden-Einheit (4) jeweils zumindest zwei Durchgangsöffnungen (5a, 5b) zum fluchtenden Anordnen der Separatorplatten (2, 3) und der Membran-Elektroden-Einheit (4) an Positionierungseinrichtungen (6a, 6b) während der Montage des elektrochemischen Systems (1) umfassen, und
- eine elastische Brücke (7), welche an der Peripherie von zumindest einer Durchgangsöffnung (5a, 5b) zum mechanischen Anlegen mit der zumindest einen Positionierungseinrichtung (6a, 6b) in einer solchen Weise angeordnet ist, dass
- sich die Membran-Elektroden-Einheiten (4) beim Stapeln der Separatorplatten (2, 3) und der Membran-Elektroden-Einheiten (4) in eine Richtung orthogonal zur Stapelrichtung zwischen den Separatorplatten (2, 3) selbst zentrieren,
wobei die elastische Brücke (7) an eine Durchgangsöffnung in der Membran-Elektroden-Einheit (4) angrenzt, wobei die Öffnung nicht zum Durchlass eines Mediums dient.

2. Elektrochemisches System nach Anspruch 1,
**dadurch gekennzeichnet, dass** die Membran-Elektroden-Einheit (4) auf ihrer zumindest einen Fläche, welche in Richtung einer Separatorplatte (2, 3) weist, zumindest abschnittsweise eine Gasdiffusionsschicht (8) umfasst.

3. Elektrochemisches System nach einem der vorangehenden Ansprüche, **dadurch gekennzeichnet, dass** zumindest eine Separatorplatte (2, 3) eine Dichtung (9a, 9b) umfasst, insbesondere eine Dichtung zum umfänglichen Begrenzen eines elektrochemisch aktiven Bereichs (10) der Membran-Elektroden-Einheit (4).

4. Elektrochemisches System nach einem der vorangehenden Ansprüche, **dadurch gekennzeichnet, dass** die Dichtung (9a, 9b) einen Bereich der Membran-Elektroden-Einheit (4) umschließt, welcher von der Gasdiffussionsschicht (8) bedeckt ist.

5. Elektrochemisches System nach einem der Ansprüche 3 oder 4,
**dadurch gekennzeichnet, dass** die Dichtung als Dichtungssicke (9a) ausgebildet ist.

6. Elektrochemisches System nach Anspruch 5,
**dadurch gekennzeichnet, dass** die Dichtungssicke (9a) als integrale Struktur der Separatorplatte (2, 3) ausgebildet ist, insbesondere in die Separatorplatte (2, 3) eingestanzt ist.

7. Elektrochemisches System nach einem der Ansprüche 3 oder 4,
**dadurch gekennzeichnet, dass** die Dichtung als Elastomer-Rippe (9b) und/oder als Einlegerahmen realisiert ist.

8. Elektrochemisches System nach einem der vorangehenden Ansprüche, **dadurch gekennzeichnet, dass** die Membran-Elektroden-Einheit (4) in dem Bereich der Gasdiffusionsschicht eine Dicke von 0,1 bis 0,7 mm, vorzugsweise von 0,15 bis 0,4 mm aufweist.

9. Elektrochemisches System nach einem der vorangehenden Ansprüche, **dadurch gekennzeichnet, dass** die elastische Brücke (7) in eine Richtung orthogonal zur Stapelrichtung eine Mindestbreite von 0,5 bis 3 mm, vorzugsweise von 1 bis 1,5 mm aufweist.

10. Elektrochemisches System nach einem der vorangehenden Ansprüche, **dadurch gekennzeichnet, dass** die elastische Brücke (7) an der äußeren Peripherie der Membran-Elektroden-Einheit (4) ausgebildet ist.

11. Elektrochemisches System nach einem der vorangehenden Ansprüche, **dadurch gekennzeichnet, dass** die Membran-Elektroden-Einheit eine, zwei, drei oder mehr elastische Brücken (7a, 7b, 7c, 7d, 7e) zum Anlegen mit den entsprechenden Positionierungseinrichtungen (6a, 6b) umfasst.

12. Konfiguration zur Herstellung eines elektrochemischen Systems, umfassend:
- eine Positionierungsvorrichtung mit zumindest zwei Positionierungseinrichtungen (6a, 6b) sowie
- zumindest zwei Separatorplatten (2, 3) und eine Membran-Elektroden-Einheit (4), wobei
- die Separatorplatten (2, 3) und die Membran-Elektroden-Einheit (4) jeweils zumindest zwei Durchgangsöffnungen (5a, 5b) zum fluchtenden Anordnen der Separatorplatten (2, 3) und der Membran-Elektroden-Einheit (4) an Positionierungseinrichtungen (6a, 6b) während der Montage des elektrochemischen Systems (1) umfasse, und
- eine elastische Brücke (7), welche an der Peripherie von zumindest einer Durchgangsöffnung (5a, 5b) zum mechanischen Anlegen mit der zumindest einen Positionierungseinrichtung (6a, 6b) in einer solchen Weise angeordnet ist, dass
- sich die Membran-Elektroden-Einheit (4) beim Stapeln der Separatorplatten (2, 3) und der Membran-Elektroden-Einheit (4) in eine Richtung orthogonal zur Stapelrichtung zwischen den Separatorplatten (2, 3) selbst zentrieren, und
- die elastische Brücke (7) an eine Durchgangsöffnung in der Membran-Elektroden-Einheit (4) angrenzt, wobei die Öffnung nicht zum Durchlass des Mediums dient.

13. Konfiguration nach Anspruch 12,
**dadurch gekennzeichnet, dass** der äußere Rand der Membran-Elektroden-Einheit (4) in dem Bereich der zumindest einen elastischen Brücke (7) mit einer solchen Überdimensionierung vorgesehen ist, dass ein dauerhafter Druck auf eine Positionierungseinrichtung ausgeübt wird, welche von der Außenseite der Membran-Elektroden-Einheit (4) an der Peripherie der Membran-Elektroden-Einheit (4) anliegt.

14. Konfiguration nach Anspruch 12,
**dadurch gekennzeichnet, dass** zumindest eine elastische Brücke (7) so ausgeführt ist, dass sie in der Lage ist, an eine Positionierungseinrichtung (6) in einem inneren Bereich der Membran-Elektroden-Einheit (4) so angelegt zu werden, dass sich die Membran-Elektroden-Einheit (4) zwischen zwei Positionierungseinrichtungen (6) verspannt.

## Revendications

1. Système électrochimique (1), et plus particulièrement système de pile à combustible, qui comprend :
- deux plaques de séparation (2, 3) ainsi que
- une électrode à membrane (4) placée entre ces plaques de séparation avec
- l'électrode à membrane (4) placée au moins dans des zones situées entre les plaques de séparation (2, 3), avec
- les plaques de séparation (2, 3) et l'électrode à membrane (4) qui comprennent chacune au moins deux ouvertures de passage (5a, 5b) destinées à être alignées avec les plaques de séparation (2, 3) et l'électrode à membrane (4) au niveau de dispositifs de positionnement (6a, 6b) pendant l'assemblage du système électrochimique (1), et
- une jonction flexible (7) placée à la périphérique d'au moins une ouverture de passage (5a, 5b) afin de buter mécaniquement contre ledit dispositif de positionnement (6a, 6b) de sorte que
- pendant l'empilement des plaques de séparation (2, 3) et des électrodes à membrane (4), les électrodes à membrane (4) se centrent dans une direction orthogonale par rapport à la direction d'empilement entre les plaques de séparation (2, 3),
dans lequel la jonction flexible (7) est jointe à un trou de passage dans l'électrode à membrane (4), ce trou ne servant pas au passage d'un milieu.

2. Système électrochimique selon la revendication 1, **caractérisé en ce que** l'électrode à membrane (4), au moins dans les sections qui se trouvent sur au moins l'une de ses surfaces qui pointe vers une plaque de séparation (2, 3), comprend une couche de diffusion de gaz (8).

3. Système électrochimique selon l'une des revendications précédentes, **caractérisé en ce qu'**au moins une plaque de séparation (2, 3) comprend un joint (9a, 9b), et plus particulièrement un joint destiné à délimiter de manière circonférentielle une zone électrochimiquement active (10) de l'électrode à membrane (4).

4. Système électrochimique selon l'une des revendications précédentes, **caractérisé en ce que** le joint (9a, 9b) encercle une zone de l'électrode à membrane (4) qui est recouverte par la couche de diffusion de gaz (8).

5. Système électrochimique selon l'une des revendications 3 ou 4, **caractérisé en ce que** le joint est formé comme un cordon d'étanchéité (9a).

6. Système électrochimique selon la revendication 5, **caractérisé en ce que** le cordon d'étanchéité (9a) est formé comme une structure intégrale de la plaque de séparation (2, 3), et est plus particulièrement embossé dans la plaque de séparation (2, 3).

7. Système électrochimique selon l'une des revendications 3 ou 4, **caractérisé en ce que** le joint est réalisé comme une nervure élastomérique (9b) et/ou comme un cadre d'insertion.

8. Système électrochimique selon l'une des revendications précédentes, **caractérisé en ce que** l'électrode à membrane (4) dans la zone de la couche de diffusion de gaz possède une épaisseur de 0,1 à 0,7 mm, de préférence de 0,15 à 0,4 mm.

9. Système électrochimique selon l'une des revendications précédentes, **caractérisé en ce que** la jonction flexible (7) dans une direction orthogonale par rapport à la direction d'empilement permet une largeur minimum de 0,5 à 3, de préférence de 1 à 1,5 mm.

10. Système électrochimique selon l'une des revendications précédentes, **caractérisé en ce que** la jonction flexible (7) est formée au niveau de la périphérie extérieure de l'électrode à membrane (4).

11. Système électrochimique selon l'une des revendications précédentes, **caractérisé en ce que** l'électrode à membrane comprend une, deux, trois jonctions flexibles ou plus (7a, 7b, 7c, 7d, 7e) destinées à buter contre le dispositif de positionnement respectif (6a, 6b).

12. Configuration de fabrication d'un système électrochimique qui comprend :
- un appareil de positionnement avec au moins deux dispositifs de positionnement (6a, 6b), ainsi que
- au moins deux plaques de séparation (2, 3) et une électrode à membrane (4), avec
- les plaques de séparation (2, 3) et l'électrode à membrane (4) qui comprennent chacune au moins deux ouvertures de passage (5a, 5b) destinées à être alignées avec les plaques de séparation (2, 3) et l'électrode à membrane (4) au niveau de dispositifs de positionnement (6a, 6b) pendant l'assemblage du système électrochimique (1), et
- une jonction flexible (7) placée à la périphérique d'au moins une ouverture de passage (5a, 5b) afin de buter mécaniquement contre ledit dispositif de positionnement (6a, 6b) de sorte que
- pendant l'empilement des plaques de séparation (2, 3) et des électrodes à membrane (4), les électrodes à membrane (4) se centrent dans une direction orthogonale par rapport à la direction d'empilement entre les plaques de séparation (2, 3),
- la jonction flexible (7) soit jointe à un trou de passage dans l'électrode à membrane (4), ce trou ne servant pas au passage d'un milieu.

13. Configuration selon la revendication 12, **caractérisée en ce que** le bord extérieur de l'électrode à membrane (4) est muni d'une surdimension dans la zone de ladite jonction flexible (7) de sorte qu'une pression permanente soit exercée sur un dispositif de positionnement qui, depuis l'extérieur de l'électrode à membrane (4), bute contre la périphérique de l'électrode à membrane (4).

14. Configuration selon la revendication 12, **caractérisée en ce qu'**au moins une jonction flexible (7) est conçue de façon à pouvoir buter contre un dispositif de positionnement (6) dans une zone intérieure de l'électrode à membrane (4) de sorte que l'électrode à membrane (4) s'étire entre deux dispositifs de positionnement (6).
